Europäisches Patentamt

European Patent Office

Office européen des brevets

(11) Publication number : **0 653 601 A1**

## (12) EUROPEAN PATENT APPLICATION

(21) Application number : 94308261.0

(22) Date of filing : 09.11.94

(51) Int. Cl.⁶ : **F41G 7/30**

(30) Priority : **15.11.93 IL 10761393**

(43) Date of publication of application :
**17.05.95 Bulletin 95/20**

(84) Designated Contracting States :
**BE CH DE DK ES GB IT LI NL PT**

(71) Applicant : **State of Israel Ministry of Defence Raphael Armament Development Authority**
**P.O. Box 2250**
**Haifa (IL)**

(72) Inventor : **Spektor, Dan**
**11 Shoffman Street**
**Haifa 34987 (IL)**
Inventor : **Keinan, Mordechay**
**36 Harofe Street**
**Haifa 34367 (IL)**
Inventor : **Boneh, Shmuel**
**58 Herev Leet Street**
**Kiryat Haim (IL)**

(74) Representative : **Beresford, Keith Denis Lewis et al**
**BERESFORD & Co.**
**2-5 Warwick Court**
**High Holborn**
**London WC1R 5DJ (GB)**

(54) **System for measuring the roll angle of moving objects.**

(57) A system for determining the absolute roll angle of a moving object (15) comprises emitting a radiation beam (16), which rotates about an axis (O) that is fixed in space ; providing on the object at least three radiation detectors (A,B,C) not aligned with one another ; measuring the times at which the beam (16a,16b,16c) intercepts said detectors ; determining from said interception times the relative roll angle ; modulating the beam as a function of the beam angle (W) ; determining from said modulation said beam angle ; and determining the absolute roll angle as the algebraic sum of the relative roll angle and the beam angle.

Fig. 2

EP 0 653 601 A1

This invention relates to a system for determining the roll orientation of moving objects through the determination of a roll angle between a plane of the object and a fixed reference plane; and optionally, the deviation of the object from its intended trajectory. The invention is preferably directed to moving objects that are able to change their trajectory, such as a land vehicle, a marine vessel, a drilling vehicle, an airplane, a missile or a spacecraft, but it can be applied to objects which are not so able, but as to which, for some reason, it is required to receive at any moment data concerning the orientation of the object with respect to a reference plane.

Certain moving objects, such as projectiles, rockets and the like, roll during their flight. In order to guide them in their flight to a given target, it is necessary to determine their roll orientation at all times with respect to the ground, and this can be done by determining the angle between a reference plane which is fixed in space and a line fixed to the moving object that is perpendicular to the roll axis. Said angle will be called hereinafter "the absolute roll angle". Any axis fixed to the object may be designated as the "roll axis" . In flying objects, the longitudinal axis of the object is normally chosen as the roll axis. In other moving objects, an axis parallel to the intended trajectory is usually chosen as the roll axis.

UK Patent 1,215,869, corresponding to USP 3,614,025, discloses a guiding system for providing data for determining the instantaneous distance of a moving object from a desired trajectory. The system comprises providing a narrow, flat laser-type beam which rotates about an axis parallel to the direction of the propagation of the light waves, which axis is also the line connecting the beam emitter to the target which the object is intended to reach. A plurality of detectors, at least three, are disposed on the object in a plane substantially perpendicular to the beam rotation axis, spaced from the central axis of the object, four such detectors being exemplified. Each time one of the detectors intercepts the beam, it sends a signal. The time intervals between successive signals are measured, and from said time intervals the deviation of the moving object, viz. the distance of the object axis from the intended trajectory, can be determined.

USP 4,910,410 discloses a device and a method for determining the roll orientation of a moving object, e.g. a missile. In said device and method, the object is provided with at least three radiation detectors offset from its central axis, as in the aforesaid UK patent. A beam of electromagnetic radiation is swept across the object and the roll orientation of the object is calculated solely from the beam arrival times at each of the detectors. The beam, which is normally a laser beam, can be scanned horizontally or vertically.

The method and the algorithm described in USP 4,910,410 permit to determine the absolute roll angle, on condition that the radiation beam be always parallel to itself while it is swept over the moving object, but not the deviation thereof from its intended trajectory. Although another patent, UK 2133652B, is mentioned, which describes apparatus for generating a laser information field for calculating the deviation of the object from its intended trajectory.

It is a purpose of this invention to provide a system for determining both the roll angle of a moving object with respect to a fixed reference plane, viz. the absolute roll angle of a moving object, and, if desired, the deviation of the object from the intended trajectory.

It is another purpose of this invention to provide such a system that achieves both of the aforesaid purposes by means of a device that is not more complex than those used in the prior art to achieve only one of said purposes.

It is a further purpose of this invention to obtain, by means of a single beam of electromagnetic radiation, all the information needed to monitor and adjust the trajectory of a moving object, as needed.

Other purposes and advantages of the invention will appear as the description proceeds.

The system according to the invention comprises emitting a radiation beam, e.g., preferably a flat laser beam, which rotates about an axis parallel to the beam propagation line and directed towards the target which the moving object is intended to reach; providing on the object at least three radiation detectors not aligned with one another, located at fixed distances from its roll axis; measuring the times at which the beam intercepts said detectors; determining from said interception times the angle between a line fixed to the object, e.g. a line connecting two detectors, and a plane fixed to the rotating beam and passing through said axis about which the beam rotates, at the moment said plane sweeps over the roll axis of the object (hereinafter "the relative roll angle"); modulating the beam, preferably but not necessarily by frequency modulation, as a function of the angle between said plane fixed to the beam and a fixed reference plane (hereinafter "the beam angle"); determining from said modulation the beam angle at the moment the beam sweeps over the object roll axis; and determining the absolute roll angle as the algebraic sum of the relative roll angle and the beam angle.

Concurrently, if desired, and by the same beam and detector means, the distance of the roll axis of the object from the rotation axis of the beam (hereinafter also, "the deviation") can also be determined as described in the cited UK Patent 1.215.869.

Preferably, all the radiation detectors should be placed symmetrically about the roll axis.

It will be appreciated that the beam angle continuously varies as the beam sweeps over the moving object, and so does the object roll orientation. In many cases the distances between two detectors are not much smaller than the deviation of the object from the axis of rotation of the beam, so that the variations of the beam angle and of the object roll orientation, as the beam sweeps over the object, must be taken into consideration.

The beam is continuous in time or pulsating. Preferably, the beam is frequency modulated. In case of a pulsating beam, the modulation can be performed by changing the intervals between the pulses or the duration of the pulses or by changing both.

An embodiment of the invention will now be described by way of example only, with reference to the accompanying drawings in which:

- Fig. 1 is a schematic perspective view illustrating the spatial relationship between the radiation emitter and the target;
- Fig. 2 is a schematic cross-section of the moving object, showing the position of the radiation detectors;
- Fig. 3 is a schematic diagram illustrating a form of radiation modulation; and

Fig. 4 illustrates an example of the determination of the desired variables.

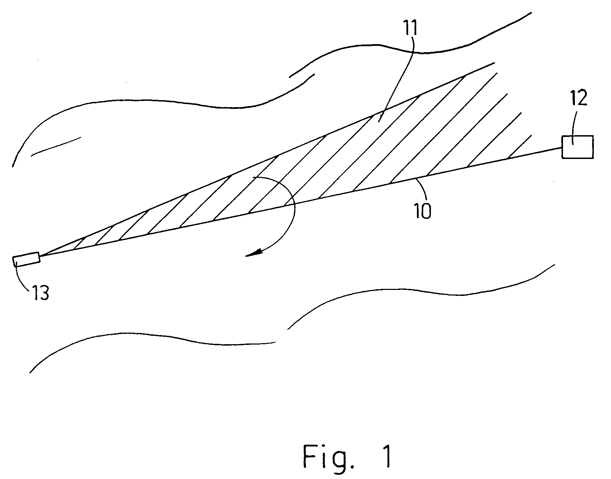

Fig. 1 is a schematic perspective drawing showing the axis 10, about which a laser beam, schematically indicated by the shading at 11, rotates. The target to be reached by the object is indicated at 12. The laser beam is emitted from emitter 13. The axis 10 of rotation of the beam is directed towards the target 12.

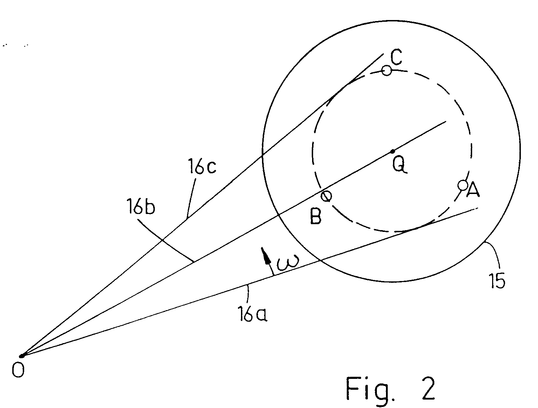

Fig. 2 schematically illustrates the position of the radiation detectors in a transverse cross-section of the moving object. Actually the object roll axis is at an angle to the beam rotation axis 10, and therefore the plane of the cross-section of Fig. 2 is not perpendicular to the beam rotation axis 10; however the angle between the object roll axis and the beam rotation axis is generally small and may be neglected in measuring the roll angle, so that the plane of Fig. 2 may be considered, for the purposes of this example, to be perpendicular to the beam axis 10 as well. It is to be noted that in fact the detectors may be offset from one another axially as well as radially, viz. they may be located in different cross-sections of the moving object. Therefore Fig. 2 should be regarded as possibly representing the axial projection of several cross-sections of the object on a common plane perpendicular to the object roll axis.

In this embodiment three detectors, eccentrically situated at A, B and C, are symmetrically located on a circle having its center at Q, which is the trace of the object roll axis on the plane of the drawing. Numeral 15 schematically indicates the periphery of the object. Point O represents the trace of the beam rotation axis on the plane of the drawing. Since the beam has a certain thickness, a plane fixed to it, and rotating with it, must be chosen for determining the roll angle - hereinafter "the rotating reference plane". Conveniently the rotating reference plane may be the central plane of the beam, viz. the plane about which the beam is symmetrical or nearly symmetrical. Numeral 16 indicates the trace on the plane of the drawing of said rotating reference plane. Since the beam is sweeping over the object at an angular velocity $\omega$, trace 16 is shown in three positions, 16a when the beam is about to intercept the first detector A, 16b when the beam passes through the center Q, and 16c after the beam has intercepted the last detector C. Each time the beam intercepts one of the detectors A, B, C, a signal or a group of pulses, in case of a pulsating beam, is produced by the detector. The interception times are measured, and from those times the deviation - the distance between the roll axis of the object and the beam rotation axis: on the drawing, the distance Q-O - and the relative roll angle, viz. the angle between a line fixed to the object, e.g. a line connecting one detector and the object center, and the plane of the beam (or more correctly, the rotating reference plane) when the same is in position 16b, can be determined,. Since the object roll orientation and the beam angle vary during the passage of the beam over the detectors, and these variations should be taken into consideration, the algorithm employed in carrying out the invention is preferably different from those disclosed in the prior art for calculating the deviation or the roll angle.

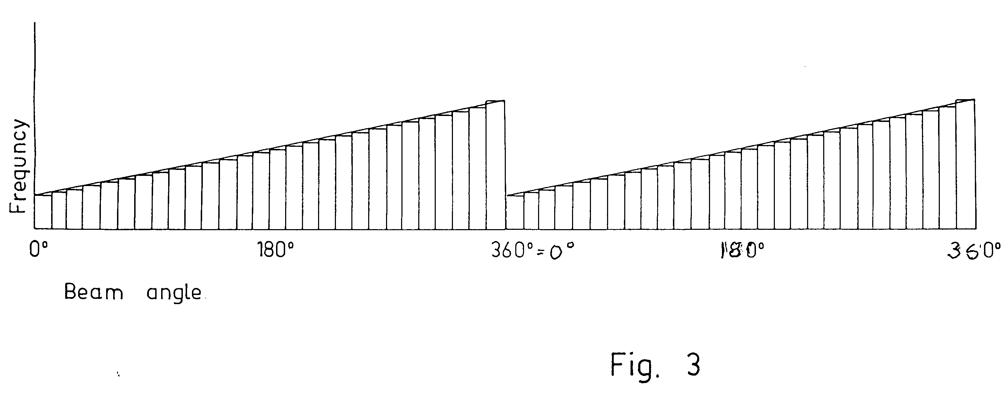

Fig. 3 illustrates the modulation of the beam, in this embodiment a frequency modulation. It is seen that the modulation is cyclical, and is of such a period that to each value of the frequency corresponds one and only one beam angle. The fixed reference plane with respect to which the beam angle is determined may have any orientation, but generally will be horizontal or vertical. The value of the frequency of the beam when it intercepts one of the detectors, e. g. detector A, determines the angle between the rotating reference plane of the beam and the fixed reference plane when the beam intercepts the detector A. From this angle and the interception times, the beam angle (the angle between the rotating reference plane of the beam in position 16b and the fixed reference plane) can be calculated. When the distances between the detectors are small compared to the object deviation from the beam rotation axis, the beam angle can be approximated by taking the average of the beam angles when it intercepts the three detectors. The algebraic sum of the relative roll angle and the beam angle is the absolute roll angle.

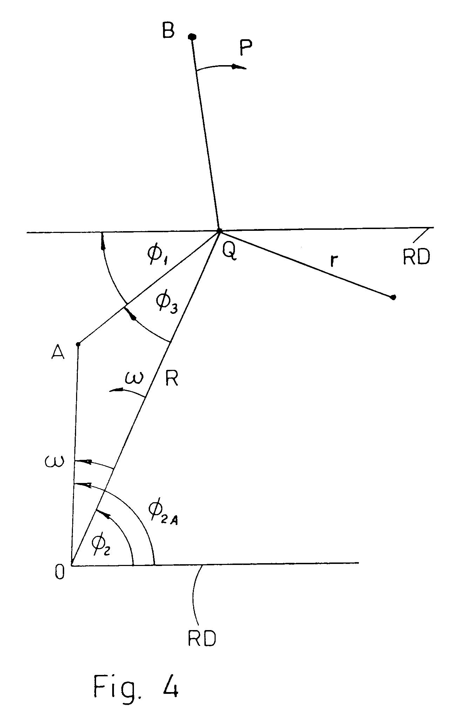

The determination of the absolute roll angle will now be described with reference to Fig. 4. In the figure Q is the object center, viz. trace of the object roll axis on the plane of the drawing. A, B and C are the three detectors, which are symmetrically located in this embodiment at a distance r from the object center Q. R is the deviation - distance from the object roll axis to the beam rotation axis. O is the trace of the beam rotation axis. $\phi_1$ is the absolute roll angle. $\phi_2$ is the beam angle. $\phi_3$ is the relative roll angle. $\phi_{2A}$ is the angle between line OA and the reference direction, measured from the beam modulation. $\omega$ is the angular velocity of the beam in rad/sec. p is the roll velocity of the object in rad/sec. RD is the reference direction, viz. the trace on the plane of the drawing of any plane parallel to the fixed reference plane. In this embodiment the reference direction is assumed to be horizontal.

The following equations permit to determine the value of the absolute roll angle $\phi_1$ and, if required, the object deviation from the beam rotation angle. In the equations, $T_A$, $T_B$ and $T_C$ are the times of the interception of the beam (or better, of the rotating reference plane) with detectors A, B and C respectively. In this embodiment, the roll velocity of the object is assumed to be known.

$$\Psi_A = \omega(T_A - T_Q)$$
$$\Psi_B = \omega(T_B - T_Q)$$
$$\Psi_C = \omega(T_Q - T_C)$$
$$\theta_A = (\omega + p)(T_A - T_Q)$$
$$\theta_B = (\omega + p)(T_B - T_Q)$$
$$\theta_C = (\omega + p)(T_Q - T_C)$$
$$\lambda_A = \omega T_A$$
$$\lambda_B = \omega T_B$$
$$\lambda_C = \omega T_C$$
$$\Lambda_A = (\omega + p)T_A$$
$$\Lambda_B = (\omega + p)T_B$$
$$\Lambda_C = (\omega + p)T_c$$
$$\gamma = \frac{2\pi}{3}$$

$$T_Q = \frac{1}{\omega}\arctan\left\{\frac{\sin(\lambda_A)\sin(2\gamma + \Lambda_B - \Lambda_C) - \sin(\lambda_B)\sin(\gamma + \Lambda_A - \Lambda_C) - \sin(\lambda_C)\sin(\gamma + \Lambda_B - \Lambda_A)}{\cos(\lambda_A)\sin(2\gamma + \Lambda_B - \Lambda_C) - \cos(\lambda_B)\sin(\gamma + \Lambda_A - \Lambda_C) - \cos(\lambda_C)\sin(\gamma + \Lambda_B - \Lambda_A)}\right\}$$

$$T_Q \approx (T_A + T_B + T_C)/3 \qquad for\ r<<R \qquad and \qquad p \leq \omega$$

$$\Phi_3 = \arctan\left[\frac{\sin(\Psi_A)\sin(\gamma + \theta_B) - \sin(\theta_A)\sin(\Psi_B)}{\sin(\Psi_B)\cos(\theta_A) - \sin(\Psi_A)\cos(\gamma + \theta_B)}\right]$$

$$R = r\frac{\sin\left[\Phi_3 + (T_A - T_Q)(\omega + p)\right]}{\sin\left[\omega(T_A - T_Q)\right]}$$

$$\Phi_2 = \Phi_{2A} + \omega(T_Q - T_A)$$
$$\Phi_2 \approx (\Phi_{2A} + \Phi_{2B} + \Phi_{2C})/3 \qquad for \qquad r<<R \qquad and \qquad p \leq \omega$$
$$\Phi_1 = \Phi_2 + \Phi_3$$

In some cases and depending on the embodiment, for the purpose of these determinations, one may neglect the variation of the object roll orientation during the passage over the detectors, and in such cases the algorithms of the prior art may provide sufficient information. However it is often desirable to take those variations into consideration, as in the above algorithm.

While embodiments of the invention have been described by way of illustration, it will be understood that the invention may be carried into practice by skilled persons with many variations, modifications and adaptations, without departing from its spirit or exceeding the scope of the claims.

## Claims

**1** - System for determining the absolute roll angle, as hereinbefore defined, of a moving object, which comprises emitting a radiation beam, which rotates about an axis that is fixed in space; providing on the object at least three radiation detectors not aligned with one another; measuring the times at which the beam intercepts said detectors; determining from said interception times the relative roll angle, as hereinbefore defined; modulating the beam as a function of the beam angle, as hereinbefore defined; determining from said modulation said beam angle; and determining the absolute roll angle as the algebraic sum of the relative roll angle and the beam angle.

**2** - System according to claim 1, wherein the radiation beam is a flat laser beam.

**3** - System according to claim 1, wherein the axis about which the radiation beam rotates is a line parallel to the direction of propagation of the beam and directed towards the target which the object is intended to reach.

**4** - System according to claim 3, wherein the axis about which the radiation beam rotates is the line connecting the point at which the radiation is emitted with the target which the moving object is intended to reach.

**5** - System according to claim 1, wherein the radiation detectors are offset from the object's roll axis.

**6** - System according to claim 1, wherein the modulation of the radiation beam is frequency modulation.

**7** - System according to claim 1, further comprising determining the distance of the roll axis of the object from the axis of rotation of the beam from the times at which the radiation beam intercepts the radiation detectors.

**8** - System according to claim 1, wherein the beam is a pulsating beam.

**9** - Apparatus for determining the absolute roll angle, as hereinbefore defined, of a moving object, which comprises means for emitting a radiation beam; means for rotating said beam about an axis that is fixed in space; at least three radiation detectors, not aligned with one another, located on the object; means for signaling the passages of the beam over said detectors; means for determining from the times of said passages the relative roll angle, as hereinbefore defined; and means for modulating the beam as a function of the beam angle, as hereinbefore defined, and determining from said modulation said beam angle.

**10** - Apparatus according to claim 9, wherein the radiation beam is a flat laser beam.

**11** - Apparatus according to claim 9, wherein the axis about which the radiation beam rotates is a line parallel to the direction of propagation of the beam and directed towards the target which the object is intended to reach.

**12** - Apparatus according to claim 3, wherein the axis about which the radiation beam rotates is the line connecting the point at which the radiation is emitted with the target which the moving object is intended to reach.

**13** - Apparatus according to claim 9, wherein the radiation detectors are offset from the object's axis.

**14** - Apparatus according to claim 9, wherein the modulation of the radiation beam is frequency modulation.

**15** - Apparatus according to claim 9, wherein a single radiation beam is emitted and which further comprises means for determining the distance of the roll axis of the object from the rotation axis of the beam from the moments at which the radiation beam intercepts the radiation detectors.

**16** - Apparatus according to claim 9, comprising means for emitting a pulsating beam and modulating the beam's pulses.

Fig. 1

Fig. 2

Fig. 3

EP 0 653 601 A1

Fig. 4

European Patent Office

**EUROPEAN SEARCH REPORT**

Application Number

EP 94 30 8261

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | EP-A-0 313 246 (BRITISH AEROSPACE PUBLIC LIMITED COMPANY) * the whole document * | 1,9 | F41G7/30 |
| A,D | LU-A-56 528 (COMPAGNIE GENERALE D' ELECTRICITE) * page 4, line 16 - page 12, line 3; figures 1-6 * | 1,9 | |
| A,D | DE-A-33 41 186 (BRITISH AEROSPACE PUBLIC LIMITED COMPANY) * abstract * * page 7, line 1 - page 17, line 16; figures 1-6 * | 1,9 | |
| | | | **TECHNICAL FIELDS SEARCHED** (Int.Cl.6) |
| | | | F41G |

The present search report has been drawn up for all claims

| Place of search | Date of completion of the search | Examiner |
|---|---|---|
| THE HAGUE | 21 February 1995 | Blondel, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)